(19) Europäisches Patentamt
European Patent Office
Office européen des brevets

(11) **EP 2 233 280 A1**

(12) **EUROPEAN PATENT APPLICATION**

(43) Date of publication:
**29.09.2010 Bulletin 2010/39**

(21) Application number: **09155900.5**

(22) Date of filing: **23.03.2009**

(51) Int Cl.:
*B29C 70/66* (2006.01)  *B29C 70/86* (2006.01)
*B29C 70/22* (2006.01)  *B29C 70/88* (2006.01)
*B29C 65/16* (2006.01)  *D04H 1/68* (2006.01)
*B29C 70/02* (2006.01)  *B29C 70/12* (2006.01)
*B29C 44/12* (2006.01)  *B29C 33/76* (2006.01)
*B29C 70/08* (2006.01)  *D04H 13/00* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Lantor B.V.
3901 RG  Veenendaal (NL)**

(72) Inventors:
• **Anjema, Pieter
3904 HL Veenendaal (NL)**

• **Jansen, Reinier Willem Johannes
6824 NM Arnhem (NL)**
• **Coppens, Petrus Jacobus Johannes
5121 AH Rijen (NL)**

(74) Representative: **Hatzmann, Martin et al
Vereenigde
Johan de Wittlaan 7
2517 JR Den Haag (NL)**

(54) **Conductive core material**

(57)    The invention is directed to a core material for closed or open mould systems, to a process for preparing a core material, to a laminate comprising the core material, to a process for preparing a shaped article, to a shaped article, and to the use of said article.

The core material of the invention comprises
- at least one fibrous web containing a foam structure within said web, said foam structure being formed of a plurality of members, wherein said members are separated from each other by channels that are permeable to resin,
- a binder, and
- a network of an electrically conductive material.

**Description**

The invention is directed to a core material for closed or open mould systems, to a process for preparing a core material, to a laminate comprising the core material, to a process for preparing a shaped article, to a shaped article, and to the use of said article.

The core material of the invention can be used in the production of fibre reinforced plastics materials, and is suitable for use in open or closed mould systems. Plastics reinforced with fibrous webs are often used for manufacturing shaped articles such as automotive or industrial parts, e.g. tanks, bath tubs, road signs, cladding panels, boats, caravans, nacelles, rotor blades, etc. Generally, the incorporation of a fibrous web in a resin material results in increased strength, stiffness, fatigue life, fracture toughness, environmental resistance, increased temperature stability, reduced weight and reduced manufacturing cost of the resin material.

Use of core materials in fibre reinforced plastics has been known for decades. The aim thereof is on the one hand to decrease the amount of resin required, resulting in cost and weight savings, and on the other hand to improve some mechanical properties of the material, such as the bending stiffness. For instance, both EP-A-1 010 793 and WO-A-2004/028776 disclose the use of a fibrous web, incorporating micro-spheres, for the manufacture of objects reinforced with such a fibrous web.

These known fibre reinforced materials, however, do not provide protection against electromagnetic interference, which may in specific applications be highly desirable.

Electromagnetic interference (EMI) refers to the susceptibility of electronic devices to external electromagnetic fields. These effects can affect electronic devices by causing current fluctuations which result for instance in unexpected switching within microprocessor units and semiconductor chips. In particular applications with a high density of electronics are highly susceptible to electromagnetic interference.

A well-known environmental cause of electromagnetic interference is lightning. Not only the initial lightning strike can be damaging, but also static electrical fields that remain after the lightning strike can have detrimental effects. In particular in applications that are susceptible for lightning strikes and in addition include a high density of advanced electronics (such as aircraft and nacelles for wind turbines) effective electromagnetic interference shielding is highly desirable.

Another disadvantage of static electrical fields is the attraction of dust and other dirt. In particular, when the article or object concerned is moving this can result in undesirable friction. As an example the blades of a wind turbine can be mentioned, wherein the attraction and accumulation of dirt due toe static electrical fields can decrease efficiency of the wind turbine.

The potential damage from electromagnetic interference can be mitigated by the inclusion of a continuous conductive shield around sensitive electronic systems, such as by providing a Faraday cage. In a Faraday cage, the electrical charges within the conducting material are allowed to redistribute themselves so as to cancel the effect within the interior of the cage.

A method of providing a composite article with a continuous conductive shield involves embedding a conductive metal wire mesh in a composite article during fabrication. This provides a conductive layer while utilising standard composite parts fabrication processes. The article may be fabricated by separately providing a metal wire mesh onto a composite laminate built-up in a mould. During moulding, resin flows into the voids of the mesh under an even pressure, integrating the structure.

However, this process requires a delicate handling of the metal wire mesh, which in practice proofs to be rather difficult. In many cases the metal wire mesh rips, displaces, and/or pierces layers that are essential for the production process (such as in vacuum injection moulding where the plastic bag used can be punctured). As a result, the metal wire meshes conventionally used in such composite materials are relatively thick so as to prevent ripping. Thick metal meshes on the other hand increase production costs of the composite materials.

Object of the invention is to provide a core material which, at least in part, overcomes the above-mentioned disadvantages.

The inventors found that this object can be met by providing a core material that has a continuous conductive shield.

Accordingly, in a first aspect the invention is directed to a material suitable for use in a closed or open mould system, comprising

- at least one fibrous web containing a foam structure within said web, said foam structure being formed of a plurality of members, wherein said members are separated from each other by channels that are permeable to resin,
- a binder, and
- a network of an electrically conductive material.

Such a core material has been found very suitable for applications in which electromagnetic shielding is required.

In addition, the core material according to the invention maintains a very good drapability, compression resistance and a suitable permeability.

The network can be a wire mesh of an electrically conductive material, but may also be realised e.g. by providing said fibrous web with a network of electrically conductive fibres. Further, it is possible to provide the network of electrically conductive material e.g. by vacuum deposition, such as by sputtering. Preferably, the network is in the form of a wire mesh.

The wire mesh can have a thickness of 500 $\mu$m or less, preferably 200 $\mu$m or less, such as 100 $\mu$m or less, or 50 $\mu$m or less. Normally, the wire mesh will be 5 $\mu$m or more, such as 10 $\mu$m or more. Thus, in accordance with the invention, very thin wire meshes can be used thereby reducing costs and weight of the end product.

Depending on the application the mesh size can vary. Usually, the mesh size is in the order of 10-1000 $\mu$m, such as 20-500 $\mu$m or 50-200 $\mu$m.

The electrically conductive material can typically be a metal. In principle any type of metal can be used. Preferably, the electrically conductive material comprises copper, aluminium and/or stainless steel. Depending on the application a different type of electrically conductive material can be used. For instance, copper is a material with relatively high conductivity, whereas aluminium is relatively a light and cheap material.

The conductivity of the core material of the invention can be in the range of $35 \cdot 10^6$ - $63 \cdot 10^6$ S/m at 20 °C, preferably in the range of $37 \cdot 10^6$ - $60 \cdot 10^6$ S/m at 20 °C.

In case the core material of the invention comprises an electrically conductive wire mesh, the fibrous web with the foam structure may advantageously act as an electrical insulator between the wire mesh and an electrically conductive article onto which the core material is applied. This can for instance be advantageous in applications where electrically conductive carbon is used for its mechanical properties, but where it is not desirable to have a current through the carbon that could negatively influence the mechanical properties of the carbon.

The core material further has the advantage that, once prepared, it can be easily cut to size depending on the application. Furthermore, due to its drapability the core material can be easily bended and formed. Depending on the properties of the electrically conductive network (such as thickness and mechanical properties of the conductive material), bending and forming of the core material may even be better than for a core material not comprising the electrically conductive network.

The presence of the electrically conductive network in the core material of the invention can also be actively used by deliberately applying an electrical current and so locally delivering heat. For instance, when preparing an article in a mould, which article comprises the core material of the invention, it is often advantageous to post cure the article. Using the electrically conductive network such a post cure can be performed in a very attractive manner. The core material of the invention allows accurately aiming the heat at the desired locations. In addition, the invention allows carrying out such post cure while the article is still in a mould.

In a similar manner, the core material of the invention can be applied in a wall of a mould in order to heat the mould.

Furthermore, the mechanical properties of the core material can be adjusted and optimised with the electrically conductive network depending on the application. For instance, when the electrically conductive network comprises copper, the impact resistance and/or toughness of the final article may be improved.

The members and channels in the core material may be distributed in a more or less regular way, e.g. with a pattern repeat of less than 1 cm, more in particular of less than 0.5 cm, or in an irregular way as described in WO-A-2004/028776.

Depending upon the intended use, in particular with respect to the need of a resin to be able to penetrate into the core material within a particular time-span, the permeability for resin of a core material according to the invention can be chosen in a wide range. Particularly good results hav been obtained with a core material having a permeability in the plane of the material for resin of at least $1 \cdot 10^{-9}$ m$^2$. In such a material the flow properties of the resin have been found to be very satisfactory. For even better flow properties, the permeability is pereferably at least $1.5 \cdot 10^{-9}$ m$^2$, more preferably at least more than $5 \cdot 10^{-9}$ m$^2$.

The permeability is largely provided by the channels, formed by the areas containing no members. The permeability ($k$) is defined herein according to the law of Darcy for steady flow as

$$q = \frac{k \cdot A}{\eta} \cdot \frac{\Delta p}{\Delta x},$$

wherein q is the resin flow in m$^3$/s, A is the total surface of the cross section through which the resin flows in m$^2$, $\eta$ is the viscosity of the resin in Ns/m$^2$, $\Delta p$ is the pressure difference in N/m$^2$, and $\Delta x$ is the distance over which the pressure difference exists and the resin flows in m. The permeability is defined in the plane of the material, i.e. not perpendicular to the material, but parallel to the upper and lower surface thereof.

The drapability is defined herein as the ability of the core material to conform to a contoured surface, in particular a mould. In particular, a core material as defined herein is considered drapable, if it can be bent around a corner with a radius of 10 mm or less, without substantial irreversible deformation of the core material. This allows the material to be draped in a good way in the mould, thus enabling the production of smoothly shaped products. The core material of the invention preferably has a drapability that allows bending around a corner with a radius of only 5 mm or less.

The compression resistance is defined herein as the ability to resist a force that tends to crush or buckle. It is measured by determining the height of the material before applying a pressure and during applying 1 bar pressure perpendicular to the plane of the material. The compression resistance is calculated as

$$100\% \times \frac{\textit{height of the material at 1 bar pressure}}{\textit{height of the material at no pressure}}.$$

The compression resistance may be chosen in a wide range, depending upon the type of application and the desired properties. Good results have *i.a.* been achieved with a core material having a compression resistance of at least 40 % at 1 bar pressure. Especially in case the core material should be suitable for a closed mould system, it is highly preferred that the compression resistance is at least 60 % at 1 bar pressure, even more preferably about 70 % or more at 1 bar pressure. Such a resistance has been found highly advantageous, because of a very low tendency of the channels being pressed together, and thus compromising the entry of resin into the channels when being processed in a closed mould. Accordingly, a core material having a compression-resistance of respectively more than 75 %, at least 80 %, at least 90 % or at least 95 % at 1 bar pressure is highly preferred.

Nonetheless, under some circumstances on may opt for a core material having a relatively low compression resistance, e.g. of about 50 % or less.

In particular in case of a core material suitable for a hand lay up or a spray up system, a relatively low compression-resistance in principle suffices, in particular a compression-resistance of 30 % at 1 bar or more.

If a good surface quality is important but there is also a desire to limit the use of resin and/or the weight of the final composite one may choose to use a material for the members with relatively light material, e.g. a micro-sphere foam structure; a material with relatively large members, e.g. in the range of 1-3 mm; a material with relatively narrow channels between the members, e.g. of less than 1 mm; and/or a relatively low free volume, e.g. in the range of 40-60 vol.%.

If the surface quality is of the utmost importance and savings in weight or cost are of lesser importance, one may to choose a core material with relatively small members, e.g. in the range of 0.5-2 mm (in case of a core material wherein the pattern is not irregular: 0.5-1.5 mm), a high degree of irregularity of the member pattern and/or a resin with a low tendency to shrink after curing, e.g. an epoxy resin.

If drapability and surface quality should be relatively high, one may choose to use relatively wide channels, e.g. with an average diameter of 0.5-2 mm (in case of a core material wherein the pattern is not irregular: 0.5-0.75 mm), in combination with relatively small members, e.g. with an average diameter of less than 1 mm, a high degree of irregularity and/or a relatively flexible fibre material, e.g. comprising polyester fibres and acrylate binder.

The members form 'isles' within or upon the web, which members are at least largely surrounded by channels, through which channels resin can flow. The channels are largely free of web material or fibres, although some fibre material may be present to provide sufficient consistency of the core material. As a rule the material content in the channels should be low enough to allow a sufficient permeability to allow sufficient penetration of resin, preferably it should allow a permeability of at least $1 \cdot 10^{-9}$ m$^2$.

The members are typically made of a closed cell foam structure, e.g. from a material that is usable as a binder material as disclosed herein. The members can also comprise micro-spheres or being formed thereof. These micro-spheres will be discussed below.

The members largely contribute to the compression resistance of the core material and are in general substantially impenetrable to the resin. The members in any case have a permeability of substantially less than $1 \cdot 10^{-9}$ m$^2$.

The members can have any shape. Good results have been achieved with a core-material wherein at least the majority of the members are selected from the group consisting of members with circular, ellipsoidal and polygonal cross-sections parallel to the plane of the material. Of course combinations thereof may be employed. Preferred members with polygonal cross-sections are members with triangular, tetragonal, pentagonal, hexagonal, heptagonal or octagonal cross-sections.

The irregular distribution may be obtained by using more or less uniformly shaped members, with the same or different dimensions. Good results have for example been achieved with a core material wherein at least the majority and preferably substantially all members have a circular or ellipsoidal cross-section parallel to the plane of the material.

The irregular distribution may be obtained by using a variety of differently shaped members. Good results have been achieved with a core material wherein at least the majority and preferably substantially all members have a polygonal cross-section parallel to the plane of the material. The differently shaped members in such a core-material are preferably selected from the group of triangles, tetragons, pentagons and hexagons.

It has been found that particularly good results with respect to surface quality are obtained with a core material having an irregular pattern wherein at least the majority of the members and preferably substantially all members have a diameter, as defined by the diameter of the enveloping circle, in the plane of the material of less than 3 mm. Preferably, at least the majority of members and more preferably substantially all members have a diameter in the plane of the material of less than 2.5 mm. Very good results have been obtained with a core material wherein at least the majority of the members have a diameter of less than 1.5 mm.

The lower limit of the diameter of the members is not particularly critical. For typical applications, at least the majority of the members will have a minimum diameter of at least about 0.2 mm. For practical reasons the diameter will generally be at least about 0.5 mm. Factors, other than the surface quality, to which the diameter of the members may be relevant is the extent to which one wishes to restrict the use of resin in a closed mould system.

Preferably at least the majority of the channels between members have an average diameter of less than 2 mm (in case of an irregular pattern), more preferably of less than 1 mm (in case of an irregular pattern), even more preferably of less than 0.5 mm. The lower limit of the channels is not particularly critical, as long as the permeability remains high enough, as defined herein. A suitable lower limit can routinely be determined by the skilled professional, depending upon the resin and moulding conditions. Typically the majority of the channels will have a minimum average diameter of at least 0.3 mm. Advantages of using a relatively high diameter, e.g. 0.5-2 mm (0.5-0.75 in case the core material does not have an irregular pattern) may be a fast flow of resin through the material and a relatively high drapability. Advantages of a relatively low diameter, e.g. 0.3-0.5 mm may include relatively low resin uptake and a higher surface quality.

The thickness of the core material can be varied within wide ranges, e.g. between 1 and 4 mm, preferably between 1.5 and 3 mm, although thicker or thinner core materials can be made in accordance with the invention.

Preferably the fibrous web containing a foam structure has a free volume of less than 80 vol.%, more preferably of 50-70 % by volume. In this respect the free volume is understood to mean the volume of the material that can be accessed by resin. The remainder of the volume will be formed by the members (and some fibres).

A preferred web comprises at least 20 wt.% of fibres, up to 80 wt.% of binder material, which is optionally foamed. The closed cell foam structure forming the members can be prepared from (optionally expandable) micro-spheres which are introduced into the web using an optionally foamed binder material.

Good results have been obtained with a core material containing micro-spheres having an activation temperature of at least 120 °C, wherein the free volume in the web is at most 80 vol.%. The web may be mechanically, physically or chemically bonded.

Much preferred is a core material comprising at least 30 wt.% of fibres, up to 70 wt.% binder material, optionally also containing expandable micro-spheres. In practice the amount of expandable micro-spheres will generally be less than 15 wt.%, preferably 1-10 wt.% based upon the total weight of the core material.

Preferably the micro-spheres are expandable and more preferably they have an activation temperature of at least 120 °C.

Very good results have been achieved with a core material wherein expanded thermoplastic micro-spheres, e.g. of a thermoplastic polymer based on an alkylmethacrylate, such as methyl methacrylate, acetonitril (such as polyacetonitril (PAN)), vinilydene chloride or a combination thereof, are present in the web, said micro-spheres having an initial expansion temperature below the curing temperature of the binder. Micro-spheres are commercially available, e.g. Expancel™ by AKZO-NOBEL.

The core material of the invention may be prepared using techniques known for producing the prior art core materials for the manual production of fibre reinforced plastic materials. The preparation may for example be based upon the methodology as described in EP-A-1 010 793. Preferably, the material is made by rotary screen printing.

In a preferred method to produce a core material, a metal wire mesh is placed over the fibrous web (or a metal network is vacuum deposited onto the fibrous web), expandable microspheres are introduced into a fibrous web using a binder material, the microspheres are expanded, and the binder is cured. The adhesive force of the binder material attaches the metal wire mesh to the core material. In a preferred method, the micro-spheres start to expand at a temperature below the curing temperature of the binder material.

The core material of the invention may suitably be prepared in a method wherein a non-woven onto which an electrically conductive wire mesh is placed, is printed with a foam or an unfoamed binder, also containing expanded micro-spheres, such as polymeric, glass or ceramic micro-spheres.

In case expandable micro-spheres are used, it is preferred to use the following process. First, a dispersion of expandable micro-spheres in a binder material is prepared, which dispersion is optionally foamed. The initial expansion temperature of the micro-spheres is preferably below the curing temperature of the binder material. Subsequently, the non-woven, having a thickness less than the required final thickness, and upon which an electrically conductive wire mesh is placed, is screen printed with the dispersion. Following this, the material is dried and heated to the expansion temperature of the micro-spheres. Optionally, the material can be pre-dried (such as at a temperature in the range of 70-100 °C) prior to bringing the material to the expansion temperature of the micro-spheres. Upon expansion the temperature is further raised with the result that the binder material cures and sets the micro-spheres in the web. At the same time the metal wire mesh is attached to the core material. In this way a core material according to the invention can be prepared.

Alternatively (or in combination with the embodiment above), a non-woven base web can be applied which comprises a network of conductive fibres within the web. In this embodiment, it is no longer required to place a metal wire mesh over the base web, but e.g. the dispersion of expandable micro-spheres can directly be screen printed on top of the base web.

The initial expansion temperature of the micro-spheres is preferably between 120 and 190 °C. The curing temperature of the binder is preferably above 170 °C.

The fibrous web to be used according to the invention will usually be a non-woven, which may be reinforced, based on conventional fibres. The manufacture of suitable non-wovens has for instance been described by Dr. H. Jörder, "Textilien auf Vliesbasis" (D.V.R. Fachbuch, P. Kepper Verlag). It is also possible to use a combination of a non-woven fibrous web with a reinforcing fabric, one within or on top of the other.

The fibres of the web are preferably selected from the group of natural fibres, glass fibres, metal fibres, ceramic fibres or synthetic fibres, such as acrylic, polyethylene, polypropylene, polyester, polyamide (aramide), carbon or polypropylene fibres and combinations thereof. More preferably, the fibres are selected from the group of glass fibres, polyester fibres, polyester-polyethylene bicomponent fibres and combinations thereof. Very good results have been achieved with polyester fibres. Polyester fibres have been found to have very good adherence with the resin and tend to have favourably low moisture content.

According to a very convenient method, the non-woven is based on a combination of polyester fibres and polyethylene-polyester bicomponent fibres (or other low temperature melting fibres or powders). These types of webs have been thermally bonded by the bicomponent fibres. By heating the web to the initial expansion temperature of the micro-spheres, which is above the melting point of the polyethylene bond, the web becomes loose and will expand easily. After expansion, and curing the final material again has its good bond, resulting in the advantageous combination of properties of the invention. At the same time the web is very easy to handle at the initial stages of the process, thanks to the thermal bonding.

The micro-spheres that may be provided in a fibrous web according to the invention preferably at least consist of a thermoplastic synthetic resin material that is solid at room temperature. Examples of suitable resins include polystyrene, styrene copolymers, polyvinyl chloride, vinyl chloride copolymers, vinylidene chloride copolymers and so forth.

In expandable micro-spheres, usually a blowing agent has been incorporated. The presence of this blowing agent is responsible for an expansion of the micro-spheres when a fibrous web, comprising the micro-spheres, is cured. Thus, the micro-spheres are pressed into the fibrous web in unexpanded form, for example by means of a paste, such as a foam paste. The blowing agent may be a chemical or physical blowing agent, such as azodicarbonamide, isobutane, isopentane, pentane, freon, iso-octane, etc.

The micro-spheres advantageously have a diameter of 4-20 $\mu$m in unexpanded state, and a diameter of preferably 10-100 $\mu$m in expanded state. After expansion of the micro-spheres, the amount thereof in the web is in general 10 to 60 vol.%. This amount depends on the amount of micro-spheres used and the degree of expansion thereof.

Suitable binders in this regard are for instance lower alkyl acrylate polymer, styrene-butadiene rubber, acrylonitrile polymer, polyurethane, epoxy resins, polyvinyl chloride, polyvinylidene chloride, and copolymers of vinylidene chloride with other monomers, polyvinyl acetate, partially hydrolyzed polyvinyl acetate, polyvinyl alcohol, polyvinyl pyrrolidone, polyester resins, and so forth. Optionally these binders can be provided with acidic groups, for example by carboxylating the binders. A suitable carboxylating agent is, for example, maleic anhydride. In addition, the binder, paste-like composition optionally contains water, surfactants, foam stabilisers, fillers and or thickeners, as has been described in EP-A-0 190 788.

The present invention further relates to a laminate at least consisting of a core material according to the invention, laminated with at least one fibrous fleece. The laminate may be formed in any way, and preferably by stitching or gluing the at least one fleece to one or both sides of the core material. Suitable methods of forming the laminate are known in the art.

An advantage of providing a laminate is the ease of use. A laminate allows easy placement of the combination of core material and fleeces in one step. Thus, the manufacturer of a composite does not have to staple different layers (e.g. respectively bottom fleece, core material, top fleece) into the mould in separate steps.

In principle any fibrous fleece suitable for preparing a composite can be used. Preferred fibrous fleeces include glass fibre fleeces, carbon fibre fleeces, polyaramide fibre fleeces and hybrids thereof, e.g. glass-carbon fibre fleeces, glass-polyaramide fibre fleeces or carbon-polyaramide fibre fleeces.

A core material according to the invention has *i.a.* been found very suitable to make thin laminates, whilst obtaining a surface with a highly desirable smooth appearance. For example a laminate according to the invention may very suitably have a total thickness of 2-10 mm, preferably of 3-6 mm. Good results have inter alia been realised with a laminate of a core material with a thickness of 1-2 mm covered at both sides with a fleece, preferably a glass fleece, with a thickness of approximately 0.4-0.8 mm, e.g. a glass fleece of about 225-600 g/m$^2$, typically about 450 g/m$^2$. Thus a laminate can be obtained with a thickness of about 2-3 mm, which laminate has been found to have a very good surface quality after being cured with a resin, in particular with an epoxy resin.

The invention also encompasses a method for manufacturing a shaped article, wherein a fibrous web as described hereinabove is impregnated with a liquid resin and a hardener therefore.

Suitable liquid resins for impregnating a fibrous web according to the invention are any synthetic plastic materials that can be applied in liquid form and be cured. Examples are polyester resins, phenylester resins, polyurethane resins, phenol resins, melamine formaldehyde resins and epoxy resins. Given the specifications of a shaped article to be manufactured, a skilled artisan will be able to suitably select an appropriate resin.

Suitable hardeners for use in a method according to the invention are any hardeners which can be used to cure the chosen liquid resin. These systems are known to the skilled person. It belongs to the standard knowledge of the person skilled in the art to be able to combine resin and hardener so as to obtain optimum results.

The present invention further relates to a shaped article based upon a core material according to the invention, in particular a shaped article obtainable by a method according to the invention wherein a core material according to the invention is impregnated with a resin and cured.

The shaped article of the invention can advantageously be used as a shielding material for static electric charges, such as in housings for electronics. Among a wide range of electromagnetic compatibility applications the following may be mentioned as examples: train building, power stations, walls of operating rooms, and nacelles (such as in aircraft and wind turbines).

The invention will now be elucidated by the following, non-restrictive example.

**Example**

The following core material-scrim combination can, when applied in the main laminate of a wind turbine nacelle, create a Faraday cage to protect the electronic devices in the nacelle.

A copper scrim was placed on a chemical bound base web consisting of 80 wt.% polyester and 20 wt.% acrylate binder.

The copper scrim was a woven square wire mesh according to ISO-9044. The mesh warp was 99.9 % copper with a thickness of 0.050 mm, and the mesh weft was 99.9 % copper with a thickness of 0.050 mm.

A hexagon pattern with an average hexagon diameter of 6 mm was printed onto this combination of non-woven and scrim with a microsphere-binder mixture (90 wt.% acrylate binder + 10 wt.% expandable microspheres Expancel®, AKZO-NOBEL; weight percentages based on solids) using rotary screen-printing, then pre-dried at about 90 °C (below the expansion temperature of the microspheres). Then the microspheres were expanded to a thickness of about 2 mm and the binder was cured at about 200 °C. Pre-drying and expanding/curing the base web and scrim resulted in sufficient bonding between the base web and the scrim.

**Claims**

1.    Core material suitable for use in a closed or open mould system, comprising

- at least one fibrous web containing a foam structure within said web, said foam structure being formed of a plurality of members, wherein said members are separated from each other by channels that are permeable to resin,
- a binder, and
- a network of an electrically conductive material.

2.    Core material according to claim 1, wherein said network is in the form of conductive fibres in said at least one fibrous web, said fibres preferably having a thickness of 500 $\mu$m or less, preferably 10-200 $\mu$m.

3.    Core material according to claim 1, wherein said network is in the form of a wire mesh, preferably having a mesh size of 10-1000 $\mu$m, preferably 20-500 $\mu$m, such as 50-200 $\mu$m.

4.    Core material according to any one of claims 1-3, wherein said electrically conductive material comprises copper, aluminium and/or stainless steel.

**5.** Core material according to any one of claims 1-4, wherein said foam structure comprises microspheres, preferably glass, ceramic or thermoplastic microspheres.

**6.** Core material according to any one of claims 1-5, wherein said foam structure is based on a mechanically stable foamed binder composition.

**7.** Core material according to any one of claims 3-6, wherein the thickness of said wire mesh is 500 $\mu$m or less, preferably 10-200 $\mu$m.

**8.** Core material according to any one of claims 3-7, wherein said wire mesh is applied by means of a sputtering technique.

**9.** Core material according to any one of claims 3-8, wherein said wire mesh is attached to said fibrous web through said binder

**10.** Process for preparing a core material according to any one of claims 3-9, said process comprising

- introducing a foamed or foam generating material into a fibrous web using at least one binder material;
- placing said wire mesh on said fibrous web; and
- setting a foam in the web by curing the binder material.

**11.** A laminate comprising a core material according to any one of claims 1-9, laminated with at least one fibrous fleece, said fibrous fleece preferably comprising one or more selected from the group consisting of glass fibres, carbon fibres and polyaramide fibres.

**12.** A process for preparing a shaped article, said process comprising placing a core material according to any one of claims 1-9, optionally in combination with one or more other non-woven fleeces, or a laminate according to claim 10 in a closed mould, introducing a liquid resin into the mould and curing the resin to produce the article.

**13.** Shaped article obtainable by the process according to claim 12.

**14.** Shaped article based upon a core material according to any one of claims 1-9 or a laminate according to claim 11.

**15.** Use of a shaped article according to claim 12 or 13 as a shielding material for static electric charges.

**EUROPEAN SEARCH REPORT**

Application Number

EP 09 15 5900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2004/028776 A (LANTOR BV [NL]; LAMERS PETER HUBERTUS [NL]; ANJEMA PIETER [NL]) 8 April 2004 (2004-04-08) | 1-9, 11-14 | INV. B29C70/66 B29C70/86 |
| Y | * page 15, line 4 - page 16, line 2; claims 1,2,12,15,17-19; figures 1-3 * | 1 | B29C70/22 B29C70/88 B29C65/16 |
| Y | US 2008/283186 A1 (RAPP MARTIN L [US]; MCFADDEN JEFF [US]; MCNALLY FRANK T [US]) 20 November 2008 (2008-11-20) * paragraphs [0003], [0009], [0034], [0043] * | 1 | D04H1/68 B29C70/02 B29C70/12 B29C44/12 B29C33/76 B29C70/08 |
| X | WO 92/22420 A (GLASIS AB [SE]) 23 December 1992 (1992-12-23) * page 1, paragraph 3 - page 3, paragraph 4; claims 1-3,7,10 * * page 5, paragraph 2 * * page 3, paragraph 3 - page 4 * * page 8, paragraph 4 * | 1,5,6,9, 10 | D04H13/00 |
| A | US 4 518 648 A (MIYATA HIROYASU [JP]; ITO KAZUHIKO [JP]) 21 May 1985 (1985-05-21) * column 2, lines 12-68; claim 1 * | 1-10 | **TECHNICAL FIELDS SEARCHED (IPC)** B29C B29D D04H |
| A | US 4 939 020 A (TAKASHIMA KATSUHIKO [JP]; MORIWAKI KATSUHIRO [JP]) 3 July 1990 (1990-07-03) * claims 1,5,8 * | 1-10 | |
| A | JP 2003 181852 A (ASAHI FIBREGLASS CO) 2 July 2003 (2003-07-02) * abstract * | 1-15 | |
| A | US 2003/134103 A1 (NOVAK HERMAN [US]) 17 July 2003 (2003-07-17) * paragraph [0042]; figure 6 * | 1-15 | |

The present search report has been drawn up for all claims

| Place of search | Date of completion of the search | Examiner |
|---|---|---|
| Munich | 14 October 2009 | Foulger, Caroline |

EPO FORM 1503 03.82 (P04C01)

## ANNEX TO THE EUROPEAN SEARCH REPORT
## ON EUROPEAN PATENT APPLICATION NO.

EP 09 15 5900

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2009

| Patent document cited in search report | | Publication date | Patent family member(s) | | Publication date |
|---|---|---|---|---|---|
| WO 2004028776 | A | 08-04-2004 | AT | 347987 T | 15-01-2007 |
| | | | AU | 2003267864 A1 | 19-04-2004 |
| | | | BR | 0314682 A | 09-08-2005 |
| | | | CA | 2500261 A1 | 08-04-2004 |
| | | | CN | 1684808 A | 19-10-2005 |
| | | | DE | 60310425 T2 | 11-10-2007 |
| | | | EP | 1403024 A1 | 31-03-2004 |
| | | | ES | 2276096 T3 | 16-06-2007 |
| | | | JP | 2006500253 T | 05-01-2006 |
| | | | KR | 20050084583 A | 26-08-2005 |
| | | | MX | PA05003242 A | 12-09-2005 |
| | | | PT | 1542845 E | 28-02-2007 |
| | | | US | 2006099401 A1 | 11-05-2006 |
| | | | ZA | 200502580 A | 22-02-2006 |
| US 2008283186 | A1 | 20-11-2008 | NONE | | |
| WO 9222420 | A | 23-12-1992 | AT | 174262 T | 15-12-1998 |
| | | | AU | 668867 B2 | 23-05-1996 |
| | | | AU | 2022392 A | 12-01-1993 |
| | | | AU | 2022492 A | 12-01-1993 |
| | | | DE | 69227847 D1 | 21-01-1999 |
| | | | DE | 69227847 T2 | 05-08-1999 |
| | | | DK | 647182 T3 | 16-08-1999 |
| | | | EP | 0647182 A1 | 12-04-1995 |
| | | | JP | 6508310 T | 22-09-1994 |
| | | | JP | 3091224 B2 | 25-09-2000 |
| | | | WO | 9222424 A1 | 23-12-1992 |
| | | | SE | 508051 C2 | 17-08-1998 |
| | | | SE | 9200674 A | 13-12-1992 |
| US 4518648 | A | 21-05-1985 | NONE | | |
| US 4939020 | A | 03-07-1990 | JP | 1712556 C | 27-11-1992 |
| | | | JP | 3056894 B | 29-08-1991 |
| | | | JP | 63319124 A | 27-12-1988 |
| | | | NL | 8801488 A | 16-01-1989 |
| JP 2003181852 | A | 02-07-2003 | JP | 4005349 B2 | 07-11-2007 |
| US 2003134103 | A1 | 17-07-2003 | NONE | | |

EPO FORM P0459

For more details about this annex : see Official Journal of the European Patent Office, No. 12/82

**EP 2 233 280 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1010793 A
- WO 2004028776 A
- EP 0190788 A